# EUROPEAN PATENT APPLICATION

(11) **EP 1 914 751 A2**
(43) Date of publication of application: **23.04.2008**
(21) Application number: 06125274.8
(22) Date of filing: 01.12.2006
(51) Int. Cl.: G11B 20/10

(54) **Data recording and recovery method for an optical storage medium and computer-readable storage medium using the method**

(30) Priority: 05.09.2006 US 469949
(71) Applicant: MediaTek, Inc, Taiwan (TW)
(72) Inventor: Chen, Min-Shu, Taipei Hsien (TW)
(74) Representative: Patentanwälte Kewitz & Kollegen

(57) **Abstract**

A data recording method for an optical storage medium is provided. Audio and video data for a title is first written to an optical storage medium. Next, backup management data is then written to the optical storage medium, a backup mark is written to the optical storage medium, management data is written to the optical storage medium, file system data is written to the optical storage medium, and the backup mark is cleared.

## Description

### BACKGROUND OF THE INVENTION

### Field of the Invention

The invention relates to a data recording method, and in particular to a data recording and recovery method for an optical storage medium.

### Description of the Related Art

When a title of multimedia data is recorded on a DVD+VR disc, audio and video (A/V) data are first written to a video object (VOB). Management data, comprising a video manager information (VMGI) file, a video title set information (VTSI) file, a video recording manager information (VRMI) file, are updated, and file system data is then updated. When the audio and video data are written to the VOB, the management backup data may be overwritten by new audio and video data.

Further, when a data recording processing on an optical storage medium begins, only one copy of the management data is valid, thus, the optical storage medium is rendered useless if the management data is invalid.

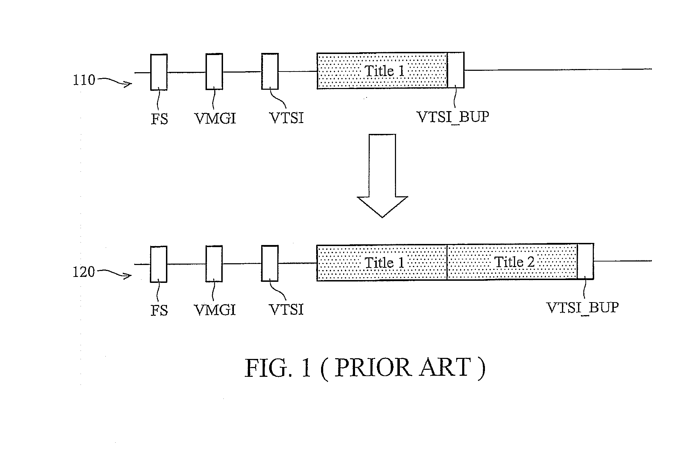

Referring to Fig. 1, when a data recording is executed, audio and video data (i.e. Title 1), VTSI backup (VTSI_BUP) data, a VTSI file, a VMGI file, and file system (FS) data are written to the optical storage medium, as shown by 110. Next, when new audio and video data (i.e. Title 2) is written to the optical storage medium, the old VTSI backup data is overwritten by Title 2, new VTSI backup data (VTSI_BUP) is written to the optical storage medium, the VTSI and VMGI files are updated, and the file system (FS) data is updated, as shown by 120.

If a power failure occurs while backup data is being written, the latest recorded content may be lost. If a power failure occurs while the file system (FS) data is written or updated, the VMGI, VTSI, and VTSI backup data may be lost. If a power failure occurs while the VTSI file is written or updated, the VTSI file may be lost and the latest VTSI backup data may not be found since the file system (FS) data has not been updated. If a power failure occurs while the VMGI file is written or updated, the VMGI file may be lost.

The described conditions, resulting due to a power failure, render the uselessness optical storage medium useless. Thus, the invention provides a data recording and recovery method, using a backup mark and backup data information to recover management data of an optical storage medium in the event of a power failure.

### BRIEF SUMMARY OF THE INVENTION

Data recording and recovery methods for an optical storage medium are provided. An exemplary embodiment of a data recording method for a DVD-VIDEO format disc comprises the following. A title of multimedia data is first recorded to an optical storage medium. VTSI backup data and VMGI backup data are recorded to the optical storage medium and a backup mark is recorded to the optical storage medium. Next, a VTSI file is recorded, a VMGI file is recorded, and file system data is recorded. When the multimedia data, backup management data, and management data titles have all been recorded to a DVD-VIDEO format disc, the backup mark is cleared.

Another embodiment of a data recording method for a DVD+VR format disc comprises the following. A title of multimedia data is first recorded to an optical storage medium. VTSI backup data, VMGI backup data, and VRMI backup data are recorded to the optical storage medium and a backup mark is recorded to the optical storage medium. Next, a VTSI file, a VMGI file, a VRMI file, and file system data are recorded. When multimedia data, backup management data, and management data titles have all been recorded to a DVD+VR format disc, the backup mark is cleared.

Another embodiment of a data recording method for a video format recording (VFR) format disc comprises the following. A title of multimedia data is first recorded to ° an optical storage medium. VTSI backup data and TMP_VMGI backup data are recorded to the optical storage medium and a backup mark is recorded to the optical storage medium. Next, a VTSI file, a TMP_VMGI file, and file system data are recorded. When multimedia data, backup management data, and management data have all been recorded to a VFR format disc, the backup mark is cleared.

An embodiment of a data recovery method for an optical storage medium comprises the following. When a backup mark is detected, a VTSI file is recovered according to VTSI backup data.

A detailed description is given in the following embodiments with reference to the accompanying drawings.

### BRIEF DESCRIPTION OF THE DRAWINGS

The invention can be more fully understood by reading the subsequent detailed description and examples with references made to the accompanying drawings, wherein:

Fig. 1 is a schematic view of a conventional workflow for a data recording processing;

Fig. 2 is a schematic view of an embodiment of a workflow for a data recording processing;

Fig. 3 is a flowchart of an embodiment of a data recording method for an optical storage medium;

Fig. 4 is a flowchart of another embodiment of a data recording method for a DVD-VIDEO format disc;

Fig. 5 is a flowchart of another embodiment of a data recording method for a DVD+VR format disc;

Fig. 6 is a flowchart of another embodiment of a data recording method for a VFR format disc; and

Fig. 7 is a flowchart of an embodiment of a data recovery method for an optical storage medium.

### DETAILED DESCRIPTION OF THE INVENTION

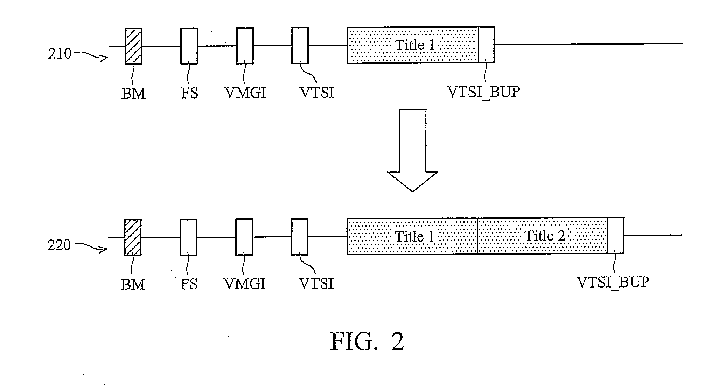

Several exemplary embodiments of the invention are described with reference to Figs. 2 through 7, which generally relate to data recording for an optical storage medium. It is to be understood that the following disclosure provides various different embodiments as examples for implementing different features of the invention. Specific examples of components and arrangements are described in the following to simplify the present disclosure. These are, of course, merely examples and are not intended to be limiting. In addition, the present disclosure may repeat reference numerals and/or letters in the various examples. This repetition is for the purpose of simplicity and clarity and does not in itself dictate a relationship between the various described embodiments and/or configurations.

The invention discloses a data recording and recovery method for an optical storage medium.

An embodiment of a data recording method writes a backup mark (BM) in an optical storage medium when backup data has been written or updated. Referring to Fig. 2, when a data recording is executed, audio and video data (i.e. Title 1) is written to an optical storage medium, VTSI backup (VTSI_BUP) data is written to the optical storage medium, a backup mark is written to the optical storage medium, a VTSI file is written to the optical storage medium, a VMGI file is written to the optical storage medium, and file system (FS) data is written to the optical storage medium, as shown by 210 of Fig. 2. Next, new audio and video data (i.e. Title 2) is written to the optical storage medium to overwrite the old VTSI backup data, new VTSI backup data (VTSI_BUP) is written to the optical storage medium, the backup mark (BM), the VTSI file, the VMGI file, and the file system (FS) data are updated, as shown by 220 of Fig. 2.

As described, when backup data for the VTSI and VMGI files have been written to the optical storage medium, a backup mark comprising required information for the backup data is set, and, when management data comprising the VTSI and VMGI files have been written to the optical storage medium, the backup mark is cleared. Next, when a power failure occurs while the management data is being written, the invalid management data can be recovered by using the backup mark. When a power failure occurs before a backup mark is set, only a recording title is lost and the optical storage medium can be re-recorded or played using other recovery methods to recover the title.

A backup mark for management data for multimedia data with a DVD+VR format comprises a VMGI backup start address in a logical block address (LBA), a VTSI backup start address in a logical block address, and a VRMI backup start address in a logical block address. The backup mark can be stored in an optical storage medium or a non-volatile random access memory (NVRAM), such as a flash memory.

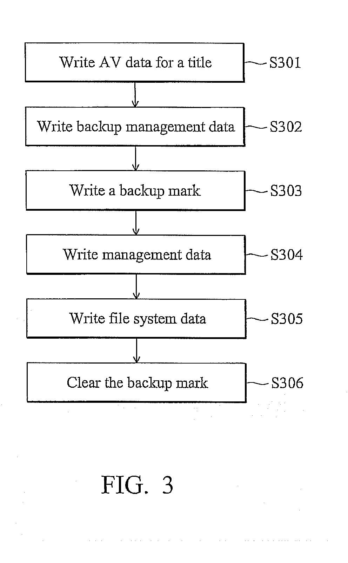

Fig. 3 is a flowchart of an embodiment of a data recording method for an optical storage medium.

Audio and video data for a title is first written to an optical storage medium (step S301). Next, backup management data (step S302), a backup mark (step S303), (step S304), and file system data (step S305) are written to the optical storage medium, and the backup mark is then cleared (step S306).

An embodiment of the data recording method can be applied to, but is not limited to, multiple data formats, such as DVD+VR, DVD-VIDEO, and VFR formats, which are separately described in the following.

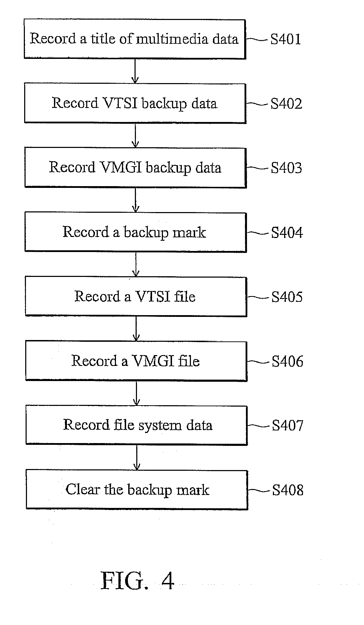

Fig. 4 is a flowchart of another embodiment of a data recording method for a DVD-VIDEO format disc.

A title of multimedia data is first recorded to an optical storage medium (step S401). VTSI backup data (step S402), VMGI backup data (step S403), and a backup mark are recorded to the optical storage medium (step S404). Next, a VTSI file (step S405), a VMGI file (step S406), and file system data are recorded (step S407). When multimedia data, backup management data, and management data have all been recorded to a DVD-VIDEO format disc, the backup mark is cleared (step S408). The backup mark comprises a VTSI backup start address and a VMGI backup start address in logical block addresses.

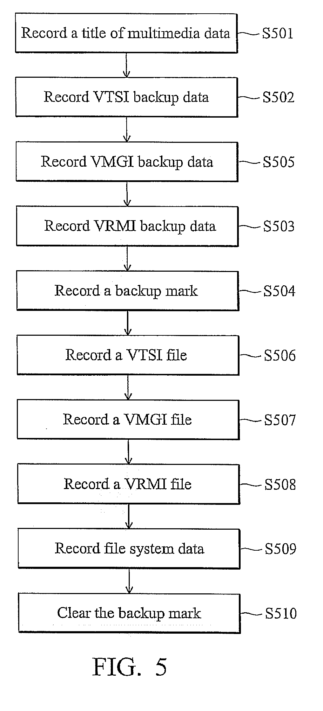

Fig. 5 is a flowchart of another embodiment of a data recording method for a DVD+VR format disc.

A multimedia data title is first recorded to an optical storage medium (step S501). VTSI backup data (step S502), VMGI backup data (step S503), VRMI backup data (step S504), and a backup mark are recorded to the optical storage medium (step S505). Next, a VTSI file (step S506), a VMGI file (step S507), a VRMI file (step S508), and file system data (step S509) are recorded. When all the multimedia data, backup management data, and management data titles have all been recorded to a DVD+VR format disc, the backup mark is cleared (step S510). The backup mark comprises a VTSI backup start address, a VMGI backup start address, and a VRMI backup start address in logical block addresses.

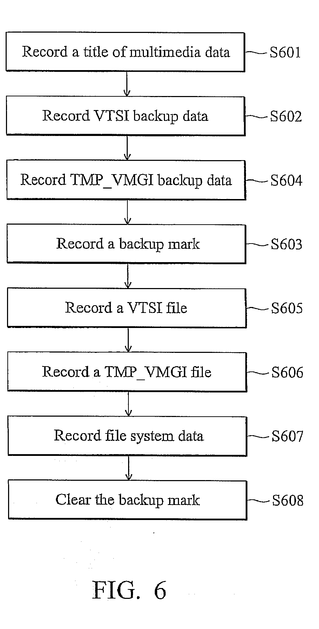

Fig. 6 is a flowchart of another embodiment of a data recording method for a VFR format disc.

A title of multimedia data is first recorded to an optical storage medium (step S601). VTSI backup data (step S602), TMP_VMGI backup data (step S603), and a backup mark (step S604) are recorded to the optical storage medium. Next, a VTSI file (step S605), a TMP_VMGI file (step S606), and file system data (step S607) are recorded. When multimedia data, backup management data, and management data titles have all been recorded to a VFR format disc, the backup mark is cleared (step S608). The backup mark comprises a VTSI backup start address and a TMP_VMGI backup start address in logical block addresses.

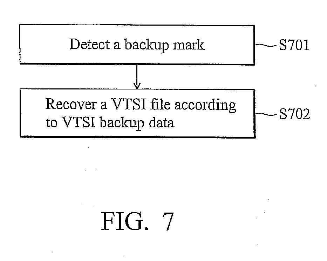

Fig. 7 is a flowchart of an embodiment of a data recovery method for an optical storage medium.

When a backup mark is detected (step S701), a VTSI file is recovered according to VTSI backup data (step S702).

Note that the described methods can be stored in a computer-readable storage medium to be executed by a computer system for implementing a data recording process.

The inventive, a data recording and recovery method, utilizes a backup mark and backup data information to recover management data of an optical storage medium when a power failure occurs.

While the invention has been described by way of example and in terms of the preferred embodiments, it is to be understood that the invention is not limited to the disclosed embodiments. To the contrary, it is intended to cover various modifications and similar arrangements (as would be apparent to those skilled in the art). Therefore, the scope of the appended claims should be accorded the broadest interpretation so as to encompass all such modifications and similar arrangements.

## Claims

1. A data recording method for an optical storage medium, comprising:
recording a title of multimedia data;
recording VTSI backup data; and
recording a backup mark on the optical storage medium after the VTSI backup data is recorded on the optical storage medium.

2. The data recording method for an optical storage medium as claimed in claim 1, wherein the backup mark comprises a VTSI backup start address in a logical block address.

3. The data recording method for an optical storage medium as claimed in claim 1, further comprising recording VMGI backup data after the VTSI backup data is recorded on the optical storage medium.

4. The data recording method for an optical storage medium as claimed in claim 3, wherein the backup mark comprises a VTSI backup start address and a VMGI backup start address in logical block addresses.

5. The data recording method for an optical storage medium as claimed in claim 3, wherein the title is compatible with DVD-VIDEO format

6. The data recording method for an optical storage medium as claimed in claim 1, further comprising:
recording VMGI backup data after the VTSI backup data is recorded on the optical storage medium; and
recording VRMI backup data after the VTSI backup data is recorded on the optical storage medium.

7. The data recording method for an optical storage medium as claimed in claim 6, wherein the backup mark comprises: a VTSI backup start address, a VMGI backup start address, and a VRMI backup start address in logical block addresses.

8. The data recording method for an optical storage medium as claimed in claim 6, wherein the title is compatible with DVD+VR format.

9. The data recording method for an optical storage medium as claimed in claim 1, further comprising recording TMP_VMGI backup data after the VTSI backup data is recorded on the optical storage medium.

10. The data recording method for an optical storage medium as claimed in claim 9, wherein the backup mark comprises a VTSI backup start address and a TMP_VMGI backup start address in logical block addresses.

11. The data recording method for an optical storage medium as claimed in claim 9, wherein the title is compatible with VFR format.

12. A data recovery method for an optical storage medium, comprising:
detecting a backup mark recorded in an optical storage medium; and
recording a VTSI file according to the VTSI backup data.

13. The data recording method for an optical storage medium as claimed in claim 12, wherein the optical storage medium is compatible with DVD-RW/+RW standard.

14. A computer-readable storage medium storing a computer program providing a data recording method for an optical storage medium, comprising using a computer to perform the steps of:
recording a title of multimedia data;
recording VTSI backup data; and
recording a backup mark on the optical storage medium after the VTSI backup data is recorded on the optical storage medium;
wherein the backup mark comprises a VTSI backup start address in a logical block address.

15. The computer-readable storage medium as claimed in claim 14, further comprising recording VMGI backup data after the VTSI backup data is recorded on the optical storage medium, wherein the backup mark comprises a VTSI backup start address and a VMGI backup start address in logical block addresses..

16. The computer-readable storage medium as claimed in claim 14, further comprising:
recording VMGI backup data after the VTSI backup data is recorded on the optical storage medium; and
recording VRMI backup data after the VTSI backup data is recorded on the optical storage medium;
wherein the backup mark comprises: a VTSI backup start address, a VMGI backup start address, and a VRMI backup start address in logical block addresses.

17. The computer-readable storage medium as claimed in claim 14, further comprising recording TMP_VMGI backup data after the VTSI backup data is recorded on the optical storage medium;
wherein the backup mark comprises a VTSI backup start address and a TMP_VMGI backup start address in logical block addresses.

18. A computer-readable storage medium storing a computer program providing a data recovery method for an optical storage medium, comprising using a computer to perform the steps of:
detecting a backup mark recorded in an optical storage medium; and
recording a VTSI file according to VTSI backup data;
wherein the optical storage medium is compatible with DVD-RW/+RW standard.
